# EUROPEAN PATENT APPLICATION

(11) **EP 4 843 774 A1**
(43) Date of publication of application: **25.11.2026**
(21) Application number: 25761484.2
(22) Date of filing: 12.02.2025
(51) Int. Cl.: B32B 15/09, B29C 55/02, B29C 63/02, B29C 65/44, B32B 7/027, B32B 15/08, B32B 27/18, B32B 27/32, C08J 5/18

(54) **RESIN-COATED METAL PLATE, METAL CONTAINER, AND METHOD FOR MANUFACTURING RESIN-COATED METAL PLATE**

(30) Priority: 01.03.2024 JP 2024031620
(71) Applicant: JFE Steel Corporation, Tokyo 100-0011 (JP)
(72) Inventor: SAEKI, Michitoshi, Tokyo 100-0011 (JP); KOIBUCHI, Shun, Tokyo 100-0011 (JP); KAWANO, Takashi, Tokyo 100-0011 (JP); UJIHIRA, Tomoyuki, Tokyo 100-0011 (JP); TAKAHASHI, Yuzuru, Tokyo 100-0011 (JP); FUJIMOTO, Soichi, Tokyo 100-0011 (JP); YAMANAKA, Yoichiro, Tokyo 100-0011 (JP)
(74) Representative: Haseltine Lake Kempner LLP
(86) International application number: PCT/JP2025/004628
(87) International publication number: WO 2025/182570

(57) **Abstract**

Provided is a resin-coated metal sheet having excellent slipperiness, abrasion resistance, and ink adhesion of the resin coating layer. The resin-coated metal sheet includes a resin coating layer containing a polyester resin and satisfying defined requirements on at least one side of a metal sheet. The outermost layer of the resin coating layer contains a polyolefin that satisfies defined requirements. The number density of polyolefin particles on the surface of the outermost layer of the resin coating layer is 50/cm² or more, and m, as defined by the following expression (1), is 0.20 or more. Here, N is a total number of particles of the polyolefin on the surface of the outermost layer, Aᵢ₁ is a number of particles of the polyolefin having a centroid located in a range of 50 µm or less from an i-th particle, Aᵢ₂ is a number of particles of the polyolefin having a centroid located in a range of more than 50 µm to 100 µm from an i-th particle, and i is an integer in a range from 1 to N. $m = \frac{1}{N} {\sum }_{i} \frac{{A}_{i 2}}{{A}_{i 1} + {A}_{i 2}}$ (1)

## Description

### TECHNICAL FIELD

The present disclosure relates to a resin-coated metal sheet, a metallic container, and a method of producing a resin-coated metal sheet.

### BACKGROUND

Laminated metal sheets have been developed in which a thermoplastic resin film is coated onto a surface of metal sheets such as tin-free steel (TFS) and aluminum, which are used as materials for metallic containers. Laminated metal sheets are widely used in the beverage can and food can industries, where severe forming processes are required.

In recent years, from the perspective of resource conservation and reduction of material costs, the materials used in metallic containers, particularly metal sheets and resin coating layers, have been made thinner by tightening forming conditions. Therefore, the amount of deformation during can production increases, and there is a possibility that the resin coating layer on the outer surface of the metallic container may break or abrade, particularly after forming. Based on this, there is a need for material designs that suppress the breaking or abrasion of the resin coating layer during can production. As a technique to suppress breaking or abrasion of a resin coating layer, in Patent Literature (PTL) 1, a method is proposed to improve the slipperiness and abrasion resistance of the resin coating layer by adding a lubricating component to the resin coating layer.

Further, the resin coating layer located on the outer surface of the container after forming is printed to improve aesthetic appeal. When the affinity between printing ink applied during the printing and the resin coating layer is low, sufficient ink adhesion cannot be ensured, which may cause the printing ink to peel off during can processing, potentially impairing the design properties and aesthetic appeal of the can appearance.

### CITATION LIST

### Patent Literature

PTL 1: WO 2019/116706 A1

### SUMMARY

### (Technical Problem)

While lubricating components added to a resin coating layer suppress breaking or abrasion of the resin coating layer, they may also inhibit the affinity between the printing ink applied during the printing process and the surface of the resin coating layer, potentially leading to ink peeling during forming. Therefore, in addition to the slipperiness and abrasion resistance of the resin coating layer, there is a need for resin-coated metal sheets that have excellent ink adhesion.

Therefore, it would be helpful to provide a resin-coated metal sheet that has excellent slipperiness, abrasion resistance, and ink adhesion of the resin coating layer, and a method of producing same.

### (Solution to Problem)

In order to solve the aforementioned problems, the inventors conducted intensive studies and made the following discoveries. Conventionally, even when specifying the amount and particle size of lubricating components to be included in the resin coating layer, excellent properties cannot be ensured when the distribution of these lubricating components is uneven. Therefore, by controlling the number density and dispersion state of lubricating components present on the outermost layer surface of the resin coating layer, a resin coating layer having excellent slipperiness, abrasion resistance, and ink adhesion can be obtained. Further, by setting defined conditions for stretching the sheet-like formed body when producing the laminated film to be thermocompression bonded onto a metal sheet, and by setting the temperatures of the metal sheet and laminate roller during thermocompression of the laminated film onto the metal sheet in appropriate ranges, the dispersion state of the lubricating components can be controlled.

Primary features of the present disclosure are as follows.
[1] A resin-coated metal sheet comprising a resin coating layer containing polyester resin on at least one side of a metal sheet,
   wherein the resin coating layer has a structure of at least three layers, including an outermost layer, an intermediate layer, and a bottom layer,
   wherein a melting point of the resin coating layer is 230 °C or higher and 260 °C or lower,
   wherein the outermost layer contains a polyolefin that is at least one of an acid-modified polyolefin or an oxidized polyolefin,
   wherein a melting point of the polyolefin is 70 °C or higher and 145 °C or lower,
   wherein the polyolefin is dispersed in particulate form in the outermost layer,
   wherein a dispersion state of particles of the polyolefin is such that, on the surface of the outermost layer, a number density of particles of the polyolefin is 50/cm² or more, and m, as defined by the following expression (1), is 0.20 or more,
      [Math. 1] $m = \frac{1}{N} {\sum }_{i} \frac{{A}_{i 2}}{{A}_{i 1} + {A}_{i 2}}$ (1)
   where N is a total number of particles of the polyolefin on the surface of the outermost layer,
   Aᵢ₁ is a number of particles of the polyolefin having a centroid located in a range of 50 µm or less from an i-th particle among the N polyolefin particles,
   Aᵢ₂ is a number of particles of the polyolefin having a centroid located in a range of over 50 µm to 100 µm from an i-th particle among the N polyolefin particles, and
   i is an integer in a range from 1 to N.
[2] The resin-coated metal sheet according to [1], wherein the polyolefin has a weight-average molecular weight of 2000 or more and 50,000 or less.
[3] The resin-coated metal sheet according to [1] or [2], wherein the polyolefin has an acid value of 1.0 mg KOH/g or more and 90 mg KOH/g or less.
[4] The resin-coated metal sheet according to any one of [1] to [3], wherein the outermost layer and the bottom layer each contain 1.0 mass% or more and 10.0 mass% or less of slip-promoting inorganic particles.
[5] The resin-coated metal sheet according to any one of [1] to [4], wherein the intermediate layer contains 10 mass% or more and 35 mass% or less of inorganic particles.
[6] The resin-coated metal sheet according to any one of [1] to [5], wherein the thicknesses of the outermost layer and the bottommost layer are each 1.0 µm or more and 5.0 µm or less, and the thickness of the intermediate layer is 6.0 µm or more and 30 µm or less.
[7] A metallic container formed using the resin-coated metal sheet according to any of [1] to [6],
   wherein the resin coating layer is on the outside of the metallic container.
[8] A method of producing a resin-coated metal sheet, the method comprising:
   a process of co-extruding, using a kneading extruder and discharging through a T-die, a first composition containing a polyester resin and at least one of an acid-modified polyolefin or an oxidized polyolefin having a melting point of 70 °C to 145 °C, a second composition containing a polyester resin, and a third composition containing a polyester resin, to obtain a sheet-shaped formed body in which the first composition, the second composition, and the third composition respectively form a first layer, a second layer, and a third layer;
   a process of cooling and solidifying the formed body to obtain a laminated film;
   a process of stretching the laminated film one or more times under conditions of a stretching temperature of 85 °C to 100 °C and a stretching ratio of 3.5 to 5.0 to obtain a resin film including the first layer, the second layer, and the third layer; and
   a process of thermocompression bonding the resin film onto at least one side of a metal sheet controlled to 260 °C to 290 °C using a laminate roller controlled to 110 °C to 120 °C, thereby obtaining a resin-coated metal sheet comprising, on at least one side of the metal sheet, a resin coating layer having a melting point of 230 °C to 260 °C and having a structure of at least three layers, with the first layer, the second layer, and the third layer being an outermost layer, an intermediate layer, and a bottom layer, respectively.
[9] The method of producing a resin-coated metal sheet according to [8], wherein the polyolefin has a weight-average molecular weight of 2000 or more and 50,000 or less.
[10] The method of producing a resin-coated metal sheet according to [8] or [9], wherein the polyolefin has an acid value of 1.0 mg KOH/g or more and 90 mg KOH/g or less.
[11] The method of producing a resin-coated metal sheet according to any one of [8] to [10], wherein the first composition and the third composition each contain 1.0 mass% or more and 10.0 mass% or less of slip-promoting inorganic particles.
[12] The method of producing a resin-coated metal sheet according to any one of [8] to [11], wherein the second composition contains 10 mass% or more and 35 mass% or less of inorganic particles.
[13] The method of producing a resin-coated metal sheet according to any one of [8] to [12], wherein the thicknesses of the outermost layer and the bottommost layer are each 1.0 µm or more and 5.0 µm or less, and the thickness of the intermediate layer is 6.0 µm or more and 30 µm or less.

### (Advantageous Effect)

According to the present disclosure, it is possible to provide a resin-coated metal sheet that has excellent slipperiness, abrasion resistance, and ink adhesion of the resin coating layer, and a method of producing same. Further, a metallic container formed using the resin-coated metal sheet can be provided.

### BRIEF DESCRIPTION OF THE DRAWINGS

In the accompanying drawings:

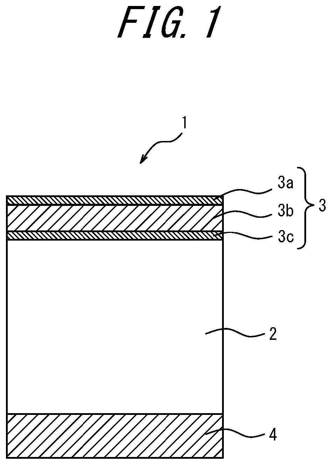

FIG. 1 is a diagram illustrating an overview of a cross-section of a resin-coated metal sheet.

### DETAILED DESCRIPTION

The following describes embodiments of a resin-coated metal sheet, a metallic container, and a method of producing a resin-coated metal sheet according to the present disclosure. The embodiments described below are example embodiments of the present disclosure, and do not limit configuration to the specific examples described.

### (Resin-coated metal sheet)

FIG. 1 is a cross-section diagram illustrating configuration of a resin-coated metal sheet according to an embodiment of the present disclosure. As illustrated in FIG. 1, the resin-coated metal sheet 1 comprises a metal sheet 2, a resin coating layer 3 formed on the front side of the metal sheet 2, and a resin coating layer 4 formed on the back side of the metal sheet 2. The resin coating layer 3 has at least a three-layer structure, and in FIG. 1, it has a three-layer structure consisting of an outermost layer 3a, an intermediate layer 3b, and a bottom layer 3c. Further, the resin coating layer 4 may also have a three-layer structure. The resin coating layer 4 is optional, and the resin coating layer 3 alone may be provided on one side of the metal sheet 2.

### [Metal sheet]

The metal sheet is preferably a steel sheet, and more preferably tinplate or tin-free steel (TFS). As tinplate, it is preferable to use tinplate having a plating amount per side of 0.5 g/m² to 15 g/m². In the case of TFS, it is preferable that the surface of the TFS has a metallic chromium layer of 50 mg/m² to 200 g/m² per side, and a chromium oxide layer formed thereon of 3 mg/m² to 30 g/m² per side, in terms of metallic chromium equivalent. The type of metal sheet is not particularly limited as long as the metal sheet can be formed into a desired shape, but a metal sheet having a composition and method of production described below is preferred.
(1) A metal sheet obtained by subjecting a low-carbon steel having a C (carbon) content of 0.010 mass% or more and 0.10 mass% or less to recrystallization annealing through continuous annealing.
(2) A metal sheet obtained by subjecting a low-carbon steel having a C content of 0.010 mass% or more and 0.10 mass% or less to recrystallization annealing through continuous annealing, and overaging treatment.
(3) A metal sheet obtained by subjecting a low-carbon steel having a C content of 0.010 mass% or more and 0.10 mass% or less to recrystallization annealing through box annealing.
(4) A metal sheet obtained by subjecting a low-carbon steel having a C content of 0.010 mass% or more and 0.10 mass% or less to recrystallization annealing through continuous annealing or box annealing, followed by secondary cold rolling (double-reduced rolling).
(5) A metal sheet obtained by subjecting an interstitial-free (IF) steel, in which elements that fix solid-solution C, such as Nb and Ti, are added to an ultra-low carbon steel having a carbon content of 0.003 mass% or less, to recrystallization annealing through continuous annealing.

The mechanical properties of the metal sheet are not particularly limited as long as the metal sheet can be formed into a target shape. To obtain suitable workability and maintain suitable can body strength, the yield point (YP) of the metal sheet is preferably 220 MPa or higher. The YP of the metal sheet is preferably 580 MPa or lower. Further, a metal sheet having a Lankford value (r value), which is an index of plastic anisotropy, of 0.8 or more is preferred. Further, a metal sheet having an absolute value of in-plane anisotropy Δr of the r value of 0.7 or less is preferred.

The composition of the metal sheet that satisfies the above mechanical properties is not particularly limited, but may contain components such as Si, Mn, P, S, Al, and N. The Si content is preferably 0.001 mass% or more. The Si content is preferably 0.1 mass% or less. The Mn content is preferably 0.01 mass% or more. The Mn content is preferably 0.6 mass% or less. The P content is preferably 0.002 mass% or more. The P content is preferably 0.05 mass% or less. The S content is preferably 0.002 mass% or more. The S content is preferably 0.05 mass% or less. The Al content is preferably 0.005 mass% or more. The Al content is preferably 0.100 mass% or less. The N content is preferably 0.0005 mass% or more. The N content is preferably 0.020 mass% or less. Further, the metal sheet may contain other components such as Ti, Nb, B, Cu, Ni, Cr, Mo, and V, but from the viewpoint of securing corrosion resistance and the like, the total content of these component elements is preferably 0.02 mass% or less.

The thickness of the metal sheet is not particularly limited. The thickness of the metal sheet is preferably 0.20 mm or more. The thickness of the metal sheet is preferably 0.25 mm or less.

### [Resin coating layer]

The resin coating layer contains polyester resin. Here, polyester resin is a polymer composed of dicarboxylic acid units and glycol units.

As dicarboxylic acid units, units derived from aromatic dicarboxylic acids such as terephthalic acid, isophthalic acid, naphthalenedicarboxylic acid, diphenyldicarboxylic acid, diphenylsulfonedicarboxylic acid, diphenoxyethanedicarboxylic acid, 5-sodiumsulfoisophthalic acid, and phthalic acid; aliphatic dicarboxylic acids such as oxalic acid, succinic acid, adipic acid, sebacic acid, dimer acid, maleic acid, and fumaric acid; alicyclic dicarboxylic acids such as cyclohexanedicarboxylic acid; and oxycarboxylic acids such as p-oxybenzoic acid can be used.

As the glycol units, units derived from aliphatic glycols such as ethylene glycol, propanediol, butanediol, pentanediol, hexanediol, and neopentyl glycol; alicyclic glycols such as cyclohexanedimethanol; aromatic glycols such as bisphenol A and bisphenol S; and diethylene glycol can be used.

The above dicarboxylic acids and glycols may be used in combinations of two or more as long as heat resistance and workability are not impaired.

When the melting point of the resin coating layer is 230 °C or higher, it is possible to prevent the resin from softening during forming, helping prevent breaking or abrasion. The melting point of the resin coating layer is therefore 230 °C or higher. The melting point is preferably 235 °C or higher. The melting point is more preferably 240 °C or higher. On the other hand, when the melting point of the resin coating layer is 260 °C or lower, the crystallinity of the contained polyester resin is in a suitable range, helping prevent breaking or abrasion of the resin coating layer during forming. The melting point of the resin coating layer is therefore 260 °C or lower. The melting point is preferably 258 °C or lower. The melting point is more preferably 255 °C or lower.

The melting point of the resin coating layer can be measured by the following method. First, the resin-coated metal sheet is immersed in a mixed solution of concentrated hydrochloric acid (30 wt%) and distilled water in a 1:1 ratio at room temperature to dissolve the metal sheet and remove the resin coating layer. In the following measurement methods, the resin coating layer is removed using the same method. The obtained resin coating layer was subjected to heat flow measurement using a differential scanning calorimeter DSCQ100 produced by TA Instruments, under the conditions of an ambient gas of N₂ with a flow rate of 50 ml/min, a temperature range of room temperature to 290 °C, and a heating rate of 10 °C/min. In the obtained heat flow, the peak top temperature of the endothermic peak in the range from 200 °C to 280 °C is defined as the melting point of the resin coating layer.

The resin coating layer has a structure consisting of at least three layers: an outermost layer, an intermediate layer, and a bottom layer. Each layer is described below.

### [Outermost layer of resin coating layer]

The outermost layer of the resin coating layer contains polyolefin as a lubricating component. The inclusion of polyolefin in the outermost layer secures excellent slipperiness and abrasion resistance, suppressing breaking or abrasion of the resin coating layer even under severe processing conditions during can forming.

The polyolefin is at least one of acid-modified polyolefin or oxidized polyolefin. Acid-modified polyolefins and oxidized polyolefins have polar groups and a high acid value, which improves the ink adhesion of the resin coating layer. The polyolefin may be an acid-modified polyethylene, an acid-modified polyolefin such as ethylene-maleic anhydride copolymer, an oxidized polyolefin such as oxidized polyethylene, or a mixture of an acid-modified polyolefin and an oxidized polyolefin.

When the polyolefin content of the outermost layer is 0.010 mass% or more, slipperiness and abrasion resistance can be suitably secured in forming, and breaking or abrasion of the resin coating layer can be suitably prevented. The polyolefin content of the outermost layer, in solid content equivalent, is therefore preferably 0.010 mass% or more. The polyolefin content is more preferably 0.050 mass% or more. The polyolefin content is even more preferably 0.100 mass% or more. On the other hand, when the polyolefin content of the outermost layer is 1.0 mass% or less, then abrasion of the resin coating layer that initiates from coarse polyolefin dispersed particles in forming can be suitably prevented. The polyolefin content of the outermost layer, in solid content equivalent, is therefore preferably 1.0 mass% or less. The polyolefin content is more preferably 0.80 mass% or less. The polyolefin content is even more preferably 0.60 mass% or less. The polyolefin content of the outermost layer can be adjusted by the amount added to the resin before extrusion in production. Further, the bottom layer may also contain polyolefin.

When the melting point of the polyolefin of the outermost layer is lower than 70 °C, the polyolefin tends to concentrate on the surface of the resin coating layer due to the heat treatment applied during the process of coating the metal sheet with the resin coating layer and in the forming of the resin-coated metal sheet. Polyolefin concentrated on the surface can hinder the adhesion of printing ink, potentially causing the ink to peel off during forming. The melting point of the polyolefin is therefore 70 °C or higher. The melting point is preferably 85 °C or higher. The melting point is more preferably 95 °C or higher. On the other hand, when the melting point of the polyolefin exceeds 145 °C, sufficient slipperiness and abrasion resistance cannot be ensured, and the resin coating layer may break or abrade during forming. The melting point of the polyolefin is therefore 145 °C or lower. The melting point is preferably 135 °C or lower. The melting point is more preferably 125 °C or lower.

The melting point of the polyolefin can be measured by the following method. First, remove the resin coating layer using the method described above. The removed resin coating layer is dissolved using hexafluoro-2-propanol (HFIP) as a solvent. After centrifuging the dissolved resin coating layer, the polyolefin contained in the outermost layer and the bottom layers of the resin coating layer is extracted by sequential pressure filtration through filters having pore sizes of 1 µm and 0.1 µm. Further, the filters are subjected to Soxhlet extraction using xylene as a solvent, followed by concentration, reprecipitation, centrifugation, and then additional extraction of polyolefin. In the various measurements described below, the extraction of polyolefin refers to the procedure described above. For the extracted polyolefin, heat flow measurements were carried out using a differential scanning calorimeter DSCQ100 produced by TA Instruments, under the conditions of an ambient gas of N₂ with a flow rate of 50 ml/min, a temperature range from room temperature to 290 °C, and a heating rate of 10 °C/min. Of the obtained heat flow, the peak top temperature of the endothermic peak in the range from 60 °C to 150 °C is defined as the melting point of the polyolefin.

The polyolefin is dispersed in particulate form in the outermost layer. Being dispersed in particulate form is a prerequisite for identifying polyolefin particles in order to define the dispersion state described below.

The inventors investigated the effect of the distribution of polyolefin in the outermost layer on the slipperiness, abrasion resistance, and ink adhesion of the resin coating layer.

The inventors conducted an analysis focusing on an observed number density and distribution state of the polyolefin on the surface of the outermost layer. As a result, the inventors discovered that the properties of the resin coating layer improve when the number density of polyolefin particles is 50/cm² or more and m, as defined by the following expression (1), is 0.20 or more. When the number density and m are in the above ranges, the concentration range of the polyolefin in the outermost layer is suitable, and the polyolefin is distributed without aggregation. Therefore, a higher level of balance can be achieved between the slipperiness, the abrasion resistance, and the ink adhesion of the resin coating layer.
[Math. 2] $m = \frac{1}{N} {\sum }_{i} \frac{{A}_{i 2}}{{A}_{i 1} + {A}_{i 2}}$ (1)

Here, N is a total number of particles of the polyolefin on the surface of the outermost layer,
Aᵢ₁ is a number of particles of the polyolefin having a centroid located in a range of 50 µm or less from an i-th particle among the N polyolefin particles,
Aᵢ₂ is a number of particles of the polyolefin having a centroid located in a range of over 50 µm to 100 µm from an i-th particle among the N polyolefin particles, and
i is an integer in a range from 1 to N.

When the number density of polyolefin particles on the surface of the outermost layer is less than 50/cm², this indicates that the concentration of added polyolefin is low, or that the added polyolefin is aggregated. In either of these conditions, superior properties cannot be ensured. The number density of polyolefin particles is therefore 50/cm² or more. The number density is preferably 100/cm² or more. The number density is more preferably 300/cm² or more. On the other hand, from the viewpoint of ink adhesion, the number density of polyolefin particles is preferably 1500/cm² or less.

When m, as defined in expression (1), is less than 0.20, this means that in the outermost layer, the number of polyolefin particles in the vicinity of a certain polyolefin particle is greater than the number of polyolefin particles located at a certain distance or greater. In other words, this indicates that there are localized high-density regions where the added polyolefin is excessively concentrated, and in this case, excellent ink adhesion cannot be obtained. Accordingly, m is 0.20 or more. m is preferably 0.30 or more. m is more preferably 0.50 or more. On the other hand, from the viewpoint of abrasion resistance, m is preferably 0.95/cm² or less.

The number density of polyolefin particles and m, as defined in expression (1), can be determined by the following methods. On the outermost surface of the resin-coated metal sheet, a Raman spectrum is measured by Raman spectroscopy using a micro-laser spectrometer LabRAM HR VIS-NIR, produced by Horiba, Ltd. The measurement conditions are as follows: confocal laser, laser power 50 %, aperture 25 µm, exposure time 0.05 s, number of exposures 1, grating 300 lines/mm, objective lens 100 times, and wavenumber range 310 cm⁻¹ to 3400 cm⁻¹. The measurement range is 200 µm (lamination direction of the resin-coated metal sheet) × 200 µm (direction perpendicular to the lamination direction within the surface of the resin-coated metal sheet). Further, the measurement pitch is 0.5 µm in each direction. Based on the obtained Raman spectroscopy data, the intensity ratio of the CH stretching vibration peak derived from polyethylene (2850 cm⁻¹) and the CH stretching vibration peak derived from polyester, the main component of the resin coating layer (2960 cm⁻¹) is calculated, and mapping is carried out. The centroids of the polyolefin are identified from the resulting mapping. Measurements are carried out on three randomly selected fields of view for each sample, and carried out for all polyolefin dispersed particles in the measurement fields. Further, the centroids of the polyolefin can be determined visually or using image processing software. The number density is determined by dividing the total number of polyolefins in each field of view by the field of view area, and then m is calculated from expression (1). From the results of the three fields of view, the average number density and m are calculated, and these are defined as the number density and m of polyolefin particles on the surface of the outermost layer of the resin-coated metal sheet.

When the weight-average molecular weight of the polyolefin is 2000 or more, it is possible to suitably prevent the polyolefin from concentrating on the surface of the resin coating layer and suitably improve ink adhesion. The weight-average molecular weight of the polyolefin is therefore preferably 2000 or more. The weight-average molecular weight is more preferably 3000 or more. The weight-average molecular weight is even more preferably 3500 or more. On the other hand, when the weight-average molecular weight of the polyolefin is 50,000 or less, suitable abrasion resistance can be secured during forming. The weight-average molecular weight of the polyolefin is therefore preferably 50,000 or less. The weight-average molecular weight is more preferably 45,000 or less. The weight-average molecular weight is more preferably 40,000 or less.

The weight-average molecular weight of the polyolefin can be measured by the following method. First, the polyolefin in the resin coating layer is extracted using the method described above. The extracted polyolefin is analyzed using a gel permeation chromatograph PL-GPC220 produced by Agilent Technologies Inc., under the following conditions: Agilent PLgel Olexis × 2 columns + Guard, and o-dichlorobenzene as the eluent. Further, a calibration curve is created from the molecular weight and elution time of standard polystyrene. Using the created calibration curve, the weight-average molecular weight of the polyolefin is calculated based on elution time.

When the polyolefin has an acid value of 1.0 mg KOH/g or higher, the affinity between the resin coating layer and the printing ink can be suitably secured, and the ink adhesion can be suitably improved. The acid value of the polyolefin is therefore preferably 1.0 mg KOH/g or more. The acid value is more preferably 2.0 mg KOH/g or more. The acid value is even more preferably 3.0 mg KOH/g or more. On the other hand, when the acid value of the polyolefin is 90 mg KOH/g or less, the polyolefin does not compatibilize with the resin coating layer, thereby securing suitable abrasion resistance during forming. The acid value of the polyolefin is therefore preferably 90 mg KOH/g or less. The acid value is more preferably 80 mg KOH/g or less. The acid value is even more preferably 70 mg KOH/g or less.

The acid value of the polyolefin can be measured by the following method. First, the polyolefin in the resin coating layer is extracted using the method described above. In accordance with JIS K5902, measure a defined amount of polyolefin corresponding to the estimated acid value into a flask and dissolve in 100 ml of neutral solvent. Next, using phenolphthalein as an indicator, the solution is titrated with a 0.1 mol/L potassium hydroxide standard solution, with the endpoint of neutralization being reached when the indicator color change persists for 30 s. The acid value is calculated from the titration results using the following expression (2). $\left(Acid value\right) = 5.611 \times A \times F / B$ (2)

Here,
A is amount of 0.1 mol/L potassium hydroxide standard solution to use, in ml,
B is sample collection amount, in g, and
F is factor of 0.1 mol/L potassium hydroxide standard solution.

The outermost layer and the bottom layer preferably contain slip-promoting inorganic particles. When the outermost layer and the bottom layer each contain 1.0 mass% or more of slip-promoting inorganic particles, the roller transportability and coiling performance during film formation of the resin coating layer are improved, blocking between resin coating layers is suppressed, and roller payoff performance is also improved. The amount of slip-promoting inorganic particles, in solid content equivalent, contained in the outermost layer and the bottom layer, respectively, is therefore preferably 1.0 mass% or more. The amount is more preferably 2.5 mass% or more. The amount is even more preferably 4.0 mass% or more. On the other hand, when the amount of slip-promoting inorganic particles contained in the outermost layer and the bottommost layer, respectively, is 10.0 mass% or less, the dispersion numbers of slip-promoting inorganic particles present on the surfaces of the outermost layer and the bottom layer are in a suitable range, improving the adhesion between the resin coating layer and the metal sheet, and suitable abrasion resistance can be obtained. The amount of slip-promoting inorganic particles, in solid content equivalent, contained in the outermost layer and the bottom layer, respectively, is therefore preferably 10.0 mass% or less. The amount is more preferably 9.0 mass% or less. The amount is even more preferably 8.0 mass% or less. The content of slip-promoting inorganic particles in the outermost layer and the bottom layer may be the same or different. Further, the content of slip-promoting inorganic particles in the outermost layer and the bottom layer can be adjusted by the amount added to the resin before extrusion in production.

The slip-promoting inorganic particles contained in the outermost layer and the bottom layer are not particularly limited, and silica, lithium fluoride, kaolin, clay, calcium carbonate, aluminum oxide, calcium phosphate, and the like may be used.

### [Intermediate layer of resin coating layer]

The resin coating layer may be required to be white in order to enhance the design properties and aesthetic appeal of can appearance after printing. In such a case, the intermediate layer of the resin coating layer preferably contains inorganic particles.

The inorganic particles contained in the intermediate layer are not particularly limited. The inorganic particles are preferably titanium oxide. The intermediate layer containing titanium oxide allows the resin coating layer to be made white. Titanium oxide used as the inorganic particles is more preferably rutile titanium oxide having a purity of 90 % or higher. When the intermediate layer contains rutile titanium oxide having a purity of 90 % or more, the titanium oxide exhibits good dispersibility when mixed with the polyester resin, resulting in uniform whiteness and improved design properties and aesthetic appeal.

When the inorganic particles contained in the intermediate layer amount to 10 mass% or more, sufficient whiteness can be secured. The amount of inorganic particles, in solid content equivalent, contained in the intermediate layer is therefore preferably 10 mass% or more. The amount is more preferably 12 mass% or more. The amount is even more preferably 15 mass% or more. On the other hand, when the amount of inorganic particles contained in the intermediate layer is 35 mass% or less, it is possible to effectively prevent breaking or abrasion of the resin coating layer even under more severe processing conditions. The amount of inorganic particles, in solid content equivalent, contained in the intermediate layer is therefore preferably 35 mass% or less. The amount is more preferably 30 mass% or less. The amount is even more preferably 25 mass% or less. The amount of inorganic particles in the intermediate layer can be adjusted by the amount added to the resin before extrusion in production.

When the thicknesses of the outermost layer and the bottommost layer are each 1.0 µm or more and 5.0 µm or less, suitable abrasion resistance can be secured during forming, and breaking or abrasion of the resin coating layer during forming can be effectively prevented. Accordingly, the thicknesses of the outermost layer and the bottom layer are preferably each 1.0 µm or more. The thicknesses are more preferably each 1.2 µm or more. The thicknesses are even more preferably each 1.5 µm or more. Similarly, the thicknesses of the outermost layer and the bottom layer are preferably each 5.0 µm or less. The thicknesses are more preferably each 4.0 µm or less. The thicknesses are even more preferably each 3.0 µm or less. The thicknesses of the outermost layer and the bottom layer may be equal or different.

When the thickness of the intermediate layer is 6.0 µm or more and 30 µm or less, there is no need to vary the thicknesses of the outermost layer and the bottom layer, and an increase or decrease in the absolute amount of polyolefin is suppressed. This keeps the dispersion state in an appropriate range, suitably preventing breaking or abrasion of the resin coating layer during forming. In addition, the ink adhesion of the resin coating layer can be suitably improved. The thickness of the intermediate layer is therefore preferably 6.0 µm or more. The thickness is more preferably 8.0 µm or more. The thickness is even more preferably 10 µm or more. On the other hand, the thickness of the intermediate layer is preferably 30 µm or less. The thickness is more preferably 25 µm or less. The thickness is even more preferably 20 µm or less.

The thicknesses of the outermost layer, the intermediate layer, and the bottom layer can be measured by the following method. First, remove the resin coating layer using the method described above. The obtained resin coating layer is coated with Pt coat on the outermost surface, embedded in resin, and then a cross-section is prepared using an ion milling device EM TIC 3X produced by Leica Microsystems Inc. The prepared cross-section is observed using a scanning electron microscope (SEM) Regulus 8220 produced by Hitachi High-Tech Corporation, under two conditions of observation magnification: 3500 times and 8000 times, to obtain reflected electron images. From the observation results, the thicknesses of the outermost layer, the intermediate layer, and the bottom layer of the resin coating layer can be determined.

### (Metallic container)

By using the resin-coated metal sheet described above, it is possible to produce a metallic container having excellent slipperiness, abrasion resistance, and ink adhesion of the resin coating layer. The metallic container can be produced using conventional methods. In the metallic container, it is preferable that the resin coating layer is on the outer surface of the metallic container.

### (Method of producing resin-coated metal sheet)

The following describes a method of producing a resin-coated metal sheet according to an embodiment of the present disclosure. According to the following embodiment, a method of production is described for the case where the resin coating layer has a three-layer structure, but the resin coating layer may have a structure of four or more layers.

In producing the resin-coated metal sheet of the present disclosure, first, a resin film that will form the resin coating layer is produced. First, a first composition, a second composition, and a third composition containing a defined resin and the like are co-extruded, using a kneading extruder and discharged through a T-die, to obtain a sheet-shaped formed body in which the first composition, the second composition, and the third composition respectively form a first layer, a second layer, and a third layer. The formed body is preferably extruded onto a cooling body such as a casting drum.

The first composition, the second composition, and the third composition become the outermost layer, the middle layer, and the bottom layer of the resin coating layer, respectively, and therefore are added so that each layer contains the polyolefin, the slip-promoting inorganic particles, and the inorganic particles described above. The method of addition is not particularly limited, but it is preferable to prepare a masterbatch in which various additives are dispersed at a high concentration in the resin, and then mix in additive-free resin pellets with the masterbatch in a defined ratio and introduce the blend into a kneading extruder. The additive content of each layer is as described above in the description of the resin coating layer. Specifically, the first composition comprises a polyester resin and a polyolefin that is at least one of an acid-modified polyolefin or an oxidized polyolefin and has a melting point of 70 °C or more and 145 °C or less. The second composition contains a polyester resin, and the third composition also contains a polyester resin.

The extrusion temperature is preferably 250 °C or higher, which is about 20 °C higher than the melting point of the polyester resin. On the other hand, the extrusion temperature is preferably 290 °C or lower.

Next, the formed body is cooled and solidified on a cooling surface such as a casting drum to obtain an unstretched laminated film. Standard cooling methods can be used.

After preparing an unstretched laminated film, the laminated film is stretched one or more times to produce a resin film. When the stretching temperature is 85 °C or more and 100 °C or less, fusing or breaking of the resin film during film production is suppressed, and further, coagulation and coarsening and a decrease in the particle count of the polyolefin can be prevented, thereby allowing the dispersion state, meaning number density and m, to be kept within appropriate ranges. The stretching temperature is therefore 85 °C or higher. The stretching temperature is preferably 88 °C or higher. The stretching temperature is more preferably 92 °C or higher. Similarly, the stretching temperature is 100 °C or lower. The stretching temperature is preferably 98 °C or lower. The stretching temperature is more preferably 96 °C or lower.

Further, when the stretching ratio during stretching is 3.5 to 5.0, it is possible to suppress breaking during film formation, keep the thickness of the resin film within an appropriate range, and suppress the occurrence of thickness variation. In addition, it is possible to prevent coagulation and coarsening and reduction in number of the polyolefin, thereby keeping the dispersion state, meaning number density and m, in appropriate ranges. The stretching ratio is therefore 3.5 or more. The stretching ratio is preferably 3.8 or more. The stretching ratio is more preferably 4.0 or more. Similarly, the stretching ratio is 5.0 or less. The stretching ratio is preferably 4.8 or less. The stretching ratio is more preferably 4.6 or less.

The prepared resin film is then heated to a temperature equal to or higher than a melting point, and is thermocompression bonded to the metal sheet using a laminate roller (thermocompression film lamination method). The thermocompression film lamination method is preferable because it controls production costs and allows for energy-efficient production.

When the temperature of the metal sheet during thermocompression bonding is from 260 °C to 290 °C, that is, when the temperature of the metal sheet is about 30 °C to 60 °C higher than the melting point of the resin coating layer, the adhesion between the laminated film and the metal sheet is improved, and fusing of the film to the laminate roller can be suppressed. In addition, the polyolefin in the resin coating layer does not coagulate and coarsen, and its dispersion state is improved, allowing the number density and m to be kept in appropriate ranges. The temperature of the metal sheet is therefore 260 °C or higher. The temperature is preferably 265 °C or higher. The temperature is more preferably 270 °C or higher. Similarly, the temperature of the metal sheet is 290 °C or lower. The temperature is preferably 288 °C or lower. The temperature is more preferably 285 °C or lower.

When the laminate roller temperature during thermocompression bonding is 110 °C or more and 120 °C or less, that is, 30 °C to 40 °C higher than the glass transition temperature of the laminated film (approximately 80 °C), fusing of the film to the laminate roller is suppressed. Further, coagulation and coarsening of the polyolefin in the resin coating layer are prevented, improving the dispersion state, thereby allowing number density and m to be kept in appropriate ranges. The laminate roller temperature is therefore 110 °C or higher. The laminate roller temperature is preferably 111 °C or higher. The laminate roller temperature is more preferably 113 °C or higher. Similarly, the laminate roller temperature is 120 °C or lower. The laminate roller temperature is preferably 119 °C or lower. The laminate roller temperature is more preferably 118 °C or lower.

For processes and conditions not described in the present disclosure, conventional methods can be used.

### EXAMPLES

Tin-free steel (TFS) having a thickness of 0.22 mm, a metallic chromium layer of 120 mg/m² per side, a chromium oxide layer of 10 mg/m² per side in metallic chromium equivalent, and a temper designation of T3CA, was used as the metal sheets. The mechanical properties of the metal sheets were YP = 400 MPa, r value = 1.0, and Δr = 0.5.

For each example, masterbatches were prepared by dispersing various additives at high concentrations in a polyester resin as the first composition, the second composition, and the third composition. According to the present embodiment, the first composition and the third composition were made from the same masterbatch. For each example, the resin components of the polyester resin of each composition were the same, and the resin components are listed in Tables 1 and 2. Further, lubricating components and slip-promoting inorganic particles were added to the masterbatches of the first composition and the third composition, and inorganic particles were added to the masterbatch of the second composition. Tables 1 and 2 list the types, weight-average molecular weights, and acid values of the lubricating components added to the first composition and the third composition for each example. Further, silica was used as the slip-promoting inorganic particles, and rutile titanium oxide was used as the inorganic particles.

For each example, the prepared masterbatch and resin pellets made of polyester resin with the aforementioned resin components were mixed and introduced into a kneading extruder so that the content in each layer after molding was as listed in Tables 1 and 2, forming a laminated film. The extrusion temperature was 278 °C. Further, the laminated film was stretched using a uniaxial stretching method to produce a resin film. Subsequently, the metal sheet was heated, and the resin film was thermocompression bonded onto both the front and back surfaces of the metal sheet using a thermocompression film lamination method. The stretching conditions (stretching temperature and stretching ratio) and thermocompression bonding conditions (metal sheet temperature and laminate roller temperature) for each example are listed in Tables 1 and 2. The laminate roller pressure during thermocompression was 400 kgf, and after 0.7 s had elapsed from thermocompression, cooling was carried out in a 50 °C water-cooling tank.

The resin-coated metal sheets were analyzed using the methods described above, including the melting point of the resin coating layer, the thickness of each layer, the melting point of the polyolefin, the weight-average molecular weight of the polyolefin, the acid value of the polyolefin, and the number density and m of polyolefin particles on the surface of the resin coating layer. The measurement results are listed in Tables 1 and 2.

### [Table 1]

**Table 1**

| | Entire resin coating layer | | | | | Outermost layer and bottom layer | | | | | | Intermediate layer | Surface of outermost layer | | Production conditions | | | |
|---|---|---|---|---|---|---|---|---|---|---|---|---|---|---|---|---|---|---|
| | Resin composition [mol%] | layer thickness [µm] | | | Melting point [°C] | Lubricating component | Lubricating component content [wt%] | Lubricating component melting point [°C] | Lubricating component weight-average molecular weight | Lubricating component acid value [mgKOH/g] | Slip-promoting inorganic particle content [wt%] | Inorganic particle content [wt%] | Lubricating component number density [/cm²] | m | Stretching temperature [°C] | Stretching ratio | Metal sheet temperature [°C] | Laminate roller temperature [°C] |
| | | Outermost layer | Intermediate layer | Bottom layer | | | | | | | | | | | | | | |
| Example 1 | ethylene terephthalate 91 | 2.0 | 16 | 2.0 | 237 | acid-modified polyethylene | 0.5 | 112 | 15000 | 50 | 5.0 | 18 | 684 | 0.66 | 95 | 4.5 | 268 | 112 |
| | ethylene isophthalate 9 | | | | | | | | | | | | | | | | | |
| Example 2 | ethylene terephthalate 95 | 2.0 | 16 | 2.0 | 249 | acid-modified polyethylene | 0.5 | 112 | 15000 | 50 | 5.0 | 18 | 721 | 0.34 | 95 | 4.5 | 280 | 115 |
| | ethylene isophthalate 5 | | | | | | | | | | | | | | | | | |
| Example 3 | ethylene terephthalate 98 | 2.0 | 16 | 2.0 | 255 | acid-modified polyethylene | 0.5 | 112 | 15000 | 50 | 5.0 | 18 | 589 | 0.31 | 95 | 4.5 | 285 | 120 |
| | ethylene isophthalate 2 | | | | | | | | | | | | | | | | | |
| Example 4 | ethylene terephthalate 95 | 2.0 | 16 | 2.0 | 249 | oxidized polyethylene | 0.5 | 105 | 14000 | 20 | 5.0 | 18 | 573 | 0.54 | 95 | 4.5 | 280 | 115 |
| | ethylene isophthalate 5 | | | | | | | | | | | | | | | | | |
| Example 5 | ethylene terephthalate 95 | 2.0 | 16 | 2.0 | 249 | acid-modified polyethylene | 0.06 | 112 | 15000 | 50 | 5.0 | 18 | 75 | 0.89 | 95 | 4.5 | 280 | 115 |
| | ethylene isophthalate 5 | | | | | | | | | | | | | | | | | |
| Example 6 | ethylene terephthalate 95 | 2.0 | 16 | 2.0 | 249 | acid-modified polyethylene | 0.1 | 112 | 15000 | 50 | 5.0 | 18 | 183 | 0.81 | 95 | 4.5 | 280 | 115 |
| | ethylene isophthalate 5 | | | | | | | | | | | | | | | | | |
| Example 7 | ethylene terephthalate 95 | 2.0 | 16 | 2.0 | 249 | acid-modified polyethylene | 0.4 | 112 | 15000 | 50 | 5.0 | 18 | 476 | 0.67 | 95 | 4.5 | 280 | 115 |
| | ethylene isophthalate 5 | | | | | | | | | | | | | | | | | |
| Example 8 | ethylene terephthalate 95 | 2.0 | 16 | 2.0 | 249 | acid-modified polyethylene | 1.0 | 112 | 15000 | 50 | 5.0 | 18 | 1087 | 0.29 | 95 | 4.5 | 280 | 115 |
| | ethylene isophthalate 5 | | | | | | | | | | | | | | | | | |
| Example 9 | ethylene terephthalate 95 | 2.0 | 16 | 2.0 | 249 | acid-modified polyethylene | 0.5 | 80 | 15000 | 50 | 5.0 | 18 | 645 | 0.63 | 95 | 4.5 | 280 | 115 |
| | ethylene isophthalate 5 | | | | | | | | | | | | | | | | | |
| Example 10 | ethylene terephthalate 95 | 2.0 | 16 | 2.0 | 249 | acid-modified polyethylene | 0.5 | 115 | 15000 | 50 | 5.0 | 18 | 569 | 0.60 | 95 | 4.5 | 280 | 115 |
| | ethylene isophthalate 5 | | | | | | | | | | | | | | | | | |
| Example 11 | ethylene terephthalate 95 | 2.0 | 16 | 2.0 | 249 | acid-modified polyethylene | 0.5 | 140 | 15000 | 50 | 5.0 | 18 | 757 | 0.69 | 95 | 4.5 | 280 | 115 |
| | ethylene isophthalate 5 | | | | | | | | | | | | | | | | | |
| Example 12 | ethylene terephthalate 95 | 2.0 | 16 | 2.0 | 249 | acid-modified polyethylene | 0.5 | 112 | 1800 | 50 | 5.0 | 18 | 701 | 0.24 | 95 | 4.5 | 280 | 110 |
| | ethylene isophthalate 5 | | | | | | | | | | | | | | | | | |
| Example 13 | ethylene terephthalate 95 | 2.0 | 16 | 2.0 | 249 | acid-modified polyethylene | 0.5 | 112 | 55000 | 50 | 5.0 | 18 | 810 | 0.58 | 95 | 4.5 | 280 | 116 |
| | ethylene isophthalate 5 | | | | | | | | | | | | | | | | | |
| Example 14 | ethylene terephthalate 95 | 2.0 | 16 | 2.0 | 249 | acid-modified polyethylene | 0.5 | 112 | 15000 | 0.7 | 5.0 | 18 | 632 | 0.23 | 95 | 4.5 | 280 | 115 |
| | ethylene isophthalate 5 | | | | | | | | | | | | | | | | | |
| Example 15 | ethylene terephthalate 95 | 2.0 | 16 | 2.0 | 249 | acid-modified polyethylene | 0.5 | 112 | 15000 | 95 | 5.0 | 18 | 851 | 0.67 | 95 | 4.5 | 280 | 115 |
| | ethylene isophthalate 5 | | | | | | | | | | | | | | | | | |
| Example 16 | ethylene terephthalate 95 | 2.0 | 16 | 2.0 | 249 | acid-modified polyethylene | 0.5 | 112 | 15000 | 50 | 0.5 | 18 | 773 | 0.67 | 95 | 4.5 | 280 | 115 |
| | ethylene isophthalate 5 | | | | | | | | | | | | | | | | | |
| Example 17 | ethylene terephthalate 95 | 2.0 | 16 | 2.0 | 249 | acid-modified polyethylene | 0.5 | 112 | 15000 | 50 | 15.0 | 18 | 668 | 0.71 | 95 | 4.5 | 280 | 115 |
| | ethylene isophthalate 5 | | | | | | | | | | | | | | | | | |
| Example 18 | ethylene terephthalate 95 | 2.0 | 16 | 2.0 | 249 | acid-modified polyethylene | 0.5 | 112 | 15000 | 50 | 5.0 | 5.0 | 540 | 0.69 | 95 | 4.5 | 280 | 115 |
| | ethylene isophthalate 5 | | | | | | | | | | | | | | | | | |
| Example 19 | ethylene terephthalate 95 | 2.0 | 16 | 2.0 | 249 | acid-modified polyethylene | 0.5 | 112 | 15000 | 50 | 5.0 | 36 | 827 | 0.68 | 95 | 4.5 | 280 | 115 |
| | ethylene isophthalate 5 | | | | | | | | | | | | | | | | | |
| Example 20 | ethylene terephthalate 95 | 0.5 | 16 | 3.5 | 249 | acid-modified polyethylene | 0.5 | 112 | 15000 | 50 | 5.0 | 18 | 694 | 0.62 | 95 | 4.5 | 280 | 114 |
| | ethylene isophthalate 5 | | | | | | | | | | | | | | | | | |
| Example 21 | ethylene terephthalate 95 | 6.0 | 13 | 1.0 | 249 | acid-modified polyethylene | 0.5 | 112 | 15000 | 50 | 5.0 | 18 | 720 | 0.60 | 95 | 4.5 | 281 | 116 |
| | ethylene isophthalate 5 | | | | | | | | | | | | | | | | | |
| Example 22 | ethylene terephthalate 95 | 7.0 | 5.0 | 8.0 | 249 | acid-modified polyethylene | 0.5 | 112 | 15000 | 50 | 5.0 | 18 | 705 | 0.63 | 95 | 4.5 | 282 | 118 |
| | ethylene isophthalate 5 | | | | | | | | | | | | | | | | | |
| Example 23 | ethylene terephthalate 95 | 1.0 | 32 | 1.0 | 249 | acid-modified polyethylene | 0.5 | 112 | 15000 | 50 | 5.0 | 18 | 732 | 0.62 | 95 | 4.5 | 280 | 115 |
| | ethylene isophthalate 5 | | | | | | | | | | | | | | | | | |
| Example 24 | ethylene terephthalate 95 | 2.0 | 16 | 2.0 | 249 | acid-modified polyethylene | 2.5 | 112 | 15000 | 50 | 5.0 | 18 | 1843 | 0.22 | 96 | 4.6 | 285 | 118 |
| | ethylene isophthalate 5 | | | | | | | | | | | | | | | | | |
| Example 25 | ethylene terephthalate 95 | 2.0 | 16 | 2.0 | 249 | acid-modified polyethylene | 0.008 | 112 | 15000 | 50 | 5.0 | 18 | 58 | 0.91 | 92 | 4.0 | 270 | 113 |
| | ethylene isophthalate 5 | | | | | | | | | | | | | | | | | |

### [Table 2]

**Table 2**

| | Entire resin coating layer | | | | | Outermost layer and bottom layer | | | | | | Intermediate layer | Surface of outermost layer | | Production conditions | | | |
|---|---|---|---|---|---|---|---|---|---|---|---|---|---|---|---|---|---|---|
| | Resin composition [mol%] | layer thickness [µm] | | | Melting point [°C] | Lubricating component | Lubricating component content [wt%] | Lubricating component melting point [°C] | Lubricating component weight-average molecular weight | Lubricating component acid value [mgKOH/g] | Slip-promoting inorganic particle content [wt%] | Inorganic particle content [wt%] | Lubricating component mmber density [/cm²] | m | Stretching temperature [°C] | Stretching ratio | Metal sheet temperature [°C] | laminate roller temperature [°C] |
| | | Outermost layer | Intermediate layer | Bottom layer | | | | | | | | | | | | | | |
| Comparative Example 1 | ethylene terephthalate 84 | 2.0 | 16 | 2.0 | 220 | acid-modified polyethylene | 0.5 | 112 | 15000 | 50 | 5.0 | 18 | 657 | 0.58 | 95 | 4.5 | 262 | 115 |
| | ethylene isophthalate 16 | | | | | | | | | | | | | | | | | |
| Comparative Example 2 | ethylene terephthalate 99 | 2.0 | 16 | 2.0 | 270 | acid-modified polyethylene | 0.5 | 112 | 15000 | 50 | 5.0 | 18 | 642 | 0.61 | 95 | 4.5 | 289 | 115 |
| | ethylene isophthalate 1 | | | | | | | | | | | | | | | | | |
| Comparative Example 3 | ethylene terephthalate 95 | 2.0 | 16 2.0 249 | | | paraffin wax | 0.5 | 55 | 450 | 0.0 | 5.0 | 18 | - | - | 95 | 4.5 | 280 | 117 |
| | ethylene isophthalate 5 | | | | | | | | | | | | | | | | | |
| Comparative Example 4 | ethylene terephthalate 95 | 2.0 | 16 | 2.0 | 249 | - | 0.0 | - | - | - | 5.0 | 18 | - | - | 95 | 4.5 | 280 | 115 |
| | ethylene isophthalate 5 | | | | | | | | | | | | | | | | | |
| Comparative Example 5 | ethylene terephthalate 95 | 2.0 | 16 | 2.0 | 249 | polyethylene | 0.5 | 112 | 17000 | 0.0 | 5.0 | 18 | - | - | 95 | 4.5 | 280 | 115 |
| | ethylene isophthalate 5 | | | | | | | | | | | | | | | | | |
| Comparative Example 6 | ethylene terephthalate 95 | 2.0 | 16 | 2.0 | 249 | polypropylene | 0.5 | 162 | 40000 | 0.0 | 5.0 | 18 | - | - | 95 | 4.5 | 280 | 115 |
| | ethylene isophthalate 5 | | | | | | | | | | | | | | | | | |
| Comparative Example 7 | ethylene terephthalate 95 | 2.0 | 16 | 2.0 | 249 | acid-modified polyethylene | 0.01 | 112 | 15000 | 50 | 5.0 | 18 | 38 | 0.58 | 95 | 4.5 | 280 | 115 |
| | ethylene isophthalate 5 | | | | | | | | | | | | | | | | | |
| Comparative Example 8 | ethylene terephthalate 95 | 2.0 | 16 | 2.0 | 249 | acid-modified polyethylene | 3.0 | 112 | 15000 | 50 | 5.0 | 18 | 2541 | 0.17 | 95 | 4.5 | 280 | 115 |
| | ethylene isophthalate 5 | | | | | | | | | | | | | | | | | |
| Comparative Example 9 | ethylene terephthalate 95 | 2.0 | 16 | 2.0 | 249 | acid-modified polyethylene | 0.5 | 65 | 15000 | 50 | 5.0 | 18 | 697 | 0.62 | 95 | 4.5 | 280 | 115 |
| | ethylene isophthalate 5 | | | | | | | | | | | | | | | | | |
| Comparative Example 10 | ethylene terephthalate 95 | 2.0 | 16 | 2.0 | 249 | acid-modified polypropylene | 0.5 | 165 | 22000 | 40 | 5.0 | 18 | 724 | 0.63 | 95 | 4.5 | 280 | 115 |
| | ethylene isophthalate 5 | | | | | | | | | | | | | | | | | |
| Comparative Example 11 | ethylene terephthalate 95 | 2.0 | 16 | 2.0 | 249 | oxidized polypropylene | 0.5 | 160 | 21000 | 15 | 5.0 | 18 | 786 | 0.61 | 95 | 4.5 | 280 | 115 |
| | ethylene isophthalate 5 | | | | | | | | | | | | | | | | | |
| Comparative Example 12 | ethylene terephthalate 95 | 2.0 | 16 | 2.0 | 249 | acid-modified polyethylene | 0.5 | 112 | 15000 | 50 | 5.0 | 18 | 45 | 0.55 | 75 | 4.5 | 280 | 115 |
| | ethylene isophthalate 5 | | | | | | | | | | | | | | | | | |
| Comparative Example 13 | ethylene terephthalate 95 | 2.0 | 16 | 2.0 | 249 | acid-modified polyethylene | 0.5 | 112 | 15000 | 50 | 5.0 | 18 | 320 | 0.18 | 125 | 4.5 | 280 | 115 |
| | ethylene isophthalate 5 | | | | | | | | | | | | | | | | | |
| Comparative Example 14 | ethylene terephthalate 95 | 2.0 | 16 | 2.0 | 249 | acid-modified polyethylene | 0.5 | 112 | 15000 | 50 | 5.0 | 18 | 47 | 0.19 | 95 | 2.0 | 280 | 115 |
| | ethylene isophthalate 5 | | | | | | | | | | | | | | | | | |
| Comparative Example 15 | ethylene terephthalate 95 | 2.0 | 16 | 2.0 | 249 | acid-modified polyethylene | 0.5 | 112 | 15000 | 50 | 5.0 | 18 | 430 | 0.17 | 95 | 7.0 | 280 | 115 |
| | ethylene isophthalate 5 | | | | | | | | | | | | | | | | | |
| Comparative Example 16 Comparative Example 17 | ethylene terephthalate 95 | 2.0 | 16 | 2.0 | 249 | acid-modified polyethylene | 0.5 | 112 | 15000 | 50 | 5.0 | 18 | 120 | 0.18 | 95 | 4.5 | 230 | 115 |
| | ethylene isophthalate 5 | | | | | | | | | | | | | | | | | |
| | ethylene terephthalate 95 | 2.0 | 16 | 2.0 | 249 | acid-modified polyethylene | 0.5 | 112 | 15000 | 50 | 5.0 | 18 | 630 | 0.17 | 95 | 4.5 | 330 | 115 |
| | ethylene isophthalate 5 | | | | | | | | | | | | | | | | | |
| Comparative Example 18 | ethylene terephthalate 95 | 2.0 | 16 | 2.0 | 249 | acid-modified polyethylene | 0.5 | 112 | 15000 | 50 | 5.0 | 18 | 130 | 0.16 | 95 | 4.5 | 280 | 85 |
| | ethylene isophthalate 5 | | | | | | | | | | | | | | | | | |
| Comparative Example 19 | ethylene terephthalate 95 | 2.0 | 16 | 2.0 | 249 | acid-modified polyethylene | 0.5 | 112 | 15000 | 50 | 5.0 | 18 | 580 | 0.18 | 95 | 4.5 | 280 | 135 |
| | ethylene isophthalate 5 | | | | | | | | | | | | | | | | | |

| | | | | | | | | | | | | | | | | | | |
|---|---|---|---|---|---|---|---|---|---|---|---|---|---|---|---|---|---|---|
| * Underlining indicates value outside scope of disclosure | | | | | | | | | | | | | | | | | | |

For each example, the slipperiness, abrasion resistance, and ink adhesion of the resin coating layer were evaluated using the methods described below. Table 3 lists the evaluation results.

### [Evaluation of slipperiness and abrasion resistance]

Each example of resin-coated metal sheet was blanked into a circular shape having a diameter of 68 mm, and sliding tests were carried out using a rotary wear testing machine produced by Takachiho Seiki Co., Ltd. The test conditions were a load of 44 N, a sample temperature of 145 ± 3 °C, a rotational speed of 370 rpm, and a rotation radius of 20 mm, using a cemented carbide ball indenter (10 mm diameter). The test surface was the resin coating layer that would be on the outer surface of the container after forming, and four samples were prepared for each example and tested individually. Based on the results obtained, the coefficient of friction at which the maximum static friction force was observed was defined as the frictional coefficient, and the slipperiness was evaluated according to the following criteria. Further, the degree of abrasion of the resin coating layer after the test was visually evaluated according to the following criteria.

### Slipperiness evaluation criteria

Rating "⊚": frictional coefficient 0.110 or less.
Rating "○": frictional coefficient more than 0.110 and 0.135 or less.
Rating "△": frictional coefficient more than 0.135 and less than 0.160.
Rating "×": frictional coefficient 0.160 or more.

### Abrasion resistance evaluation criteria

Rating "○": no abrasion observed in all four tests.
Rating "△": abrasion observed in one out of four tests.
Rating "×": abrasion observed in two or more of four tests.

### [Ink adhesion evaluation]

Each resin-coated metal sheet was placed in a hot air drying oven and subjected to a heat treatment that reached 240 °C in 2 min, followed by cooling to room temperature. For each sample after cooling, melamine-based printing ink was printed onto the resin coating layer located on the outer surface of the container after forming, using a universal printing test machine produced by Kumagai Riki Kogyo Co., Ltd. Each sample immediately after printing was placed in a hot air drying oven and subjected to heat treatment that reached 230 °C in 1 min, followed by cooling to room temperature. Scratch tests were carried out on the ink-printed surface of each sample, using a load-variable friction and wear testing machine HHS2000 produced by Shinto Scientific Co., Ltd., towards the rolling direction of the sample. The test conditions were as follows: a sapphire indenter (0.6 mm diameter) was used, with a continuous load of 10 gf to 1000 gf from the printed end, a travel speed of 0.5 mm/s, and a travel distance of 30 mm. Three samples were prepared for each example, and the test was carried out five times on different locations of each sample. The peeling load of the ink was calculated from the peeling length of the ink in each test, and an average value of the peeling load over 15 tests was determined. Ink adhesion was then evaluated according to the following criteria.

### Ink adhesion evaluation criteria

Rating "⊚": average peeling load 400 g or more.
Rating "○": average peeling load from 300 g to less than 400 g.
Rating "△": average peeling load from 200 g to less than 300 g.
Rating "×": average peeling load less than 200 g.

### [Table 3]

**Table 3**

| | Slipperiness | Abrasion resistance | Ink adhesion |
|---|---|---|---|
| Example 1 | ⊚ | ○ | ⊚ |
| Example 2 | ⊚ | ○ | ○ |
| Example 3 | ⊚ | ○ | ○ |
| Example 4 | ⊚ | ○ | ⊚ |
| Example 5 | ○ | Δ | ⊚ |
| Example 6 | ⊚ | ○ | ⊚ |
| Example 7 | ⊚ | ○ | ⊚ |
| Example 8 | ⊚ | ○ | ○ |
| Example 9 | ⊚ | ○ | ⊚ |
| Example 10 | ⊚ | ○ | ⊚ |
| Example 11 | ⊚ | ○ | ⊚ |
| Example 12 | ⊚ | ○ | Δ |
| Example 13 | ⊚ | Δ | ⊚ |
| Example 14 | ⊚ | ○ | Δ |
| Example 15 | ⊚ | Δ | ⊚ |
| Example 16 | ⊚ | ○ | ⊚ |
| Example 17 | ⊚ | Δ | ⊚ |
| Example 18 | ⊚ | ○ | ⊚ |
| Example 19 | ⊚ | Δ | ⊚ |
| Example 20 | ○ | Δ | ⊚ |
| Example 21 | ⊚ | Δ | ⊚ |
| Example 22 | ⊚ | Δ | ⊚ |
| Example 23 | ⊚ | Δ | ○ |
| Example 24 | ⊚ | Δ | Δ |
| Example 25 | ○ | Δ | Δ |

**Table 3 (cont'd)**

| | Slipperiness | Abrasion resistance | Ink adhesion |
|---|---|---|---|
| Comparative Example 1 | ○ | ○ | × |
| Comparative Example 2 | ○ | × | ○ |
| Comparative Example 3 | × | × | × |
| Comparative Example 4 | × | × | ○ |
| Comparative Example 5 | ○ | ○ | × |
| Comparative Example 6 | × | × | × |
| Comparative Example 7 | × | × | × |
| Comparative Example 8 | ⊚ | × | × |
| Comparative Example 9 | Δ | Δ | × |
| Comparative Example 10 | × | × | ○ |
| Comparative Example 11 | × | × | Δ |
| Comparative Example 12 | × | × | Δ |
| Comparative Example 13 | ⊚ | ○ | × |
| Comparative Example 14 | × | × | × |
| Comparative Example 15 | ⊚ | ○ | × |
| Comparative Example 16 | ○ | Δ | × |
| Comparative Example 17 | ⊚ | ○ | × |
| Comparative Example 18 | ○ | Δ | × |
| Comparative Example 19 | ⊚ | ○ | × |

From Table 3, it is clear that for the Examples that satisfy the conditions defined in the present disclosure, a suitable number density and dispersion state of lubricating components can be obtained, and a resin-coated metal sheet having excellent slipperiness, abrasion resistance, and ink adhesion of the resin coating layer is obtainable. In contrast, for Comparative Examples that did not meet the conditions defined in the present disclosure, one or more of the following properties of the resin coating layer, slipperiness, abrasion resistance, or ink adhesion, were evaluated as "×". In particular, for Comparative Examples 7 and 8, depending on the combination of the amount of lubricating component added, the stretching temperature, stretching ratio, metal sheet temperature, and laminate roller temperature, coagulation and coarsening of the lubricating component or a decrease in particle number occurred, and a suitable dispersion state could not be obtained.

### INDUSTRIAL APPLICABILITY

According to the present disclosure, it is possible to provide a resin-coated metal sheet that has excellent slipperiness, abrasion resistance, and ink adhesion of the resin coating layer, and a method of producing same. Further, a metallic container formed using the resin-coated metal sheet can be provided.

### REFERENCE SIGNS LIST

- 1: resin-coated metal sheet
- 2: metal sheet
- 3: resin coating layer
- 3a: outermost layer
- 3b: intermediate layer
- 3c: bottom layer
- 4: resin coating layer

## Claims

1. A resin-coated metal sheet comprising a resin coating layer containing polyester resin on at least one side of a metal sheet,
wherein the resin coating layer has a structure of at least three layers, including an outermost layer, an intermediate layer, and a bottom layer,
wherein a melting point of the resin coating layer is 230 °C or higher and 260 °C or lower,
wherein the outermost layer contains a polyolefin that is at least one of an acid-modified polyolefin or an oxidized polyolefin,
wherein a melting point of the polyolefin is 70 °C or higher and 145 °C or lower,
wherein the polyolefin is dispersed in particulate form in the outermost layer,
wherein a dispersion state of particles of the polyolefin is such that, on the surface of the outermost layer, a number density of particles of the polyolefin is 50/cm² or more, and m, as defined by the following expression (1), is 0.20 or more,
[Math. 1] $m = \frac{1}{N} {\sum }_{i} \frac{{A}_{i 2}}{{A}_{i 1} + {A}_{i 2}}$ (1)
where N is a total number of particles of the polyolefin on the surface of the outermost layer,
Aᵢ₁ is a number of particles of the polyolefin having a centroid located in a range of 50 µm or less from an i-th particle among the N polyolefin particles,
Aᵢ₂ is a number of particles of the polyolefin having a centroid located in a range of over 50 µm to 100 µm from an i-th particle among the N polyolefin particles, and
i is an integer in a range from 1 to N.

2. The resin-coated metal sheet according to claim 1, wherein the polyolefin has a weight-average molecular weight of 2000 or more and 50,000 or less.

3. The resin-coated metal sheet according to claim 1 or 2, wherein the polyolefin has an acid value of 1.0 mg KOH/g or more and 90 mg KOH/g or less.

4. The resin-coated metal sheet according to any one of claims 1 to 3, wherein the outermost layer and the bottom layer each contain 1.0 mass% or more and 10.0 mass% or less of slip-promoting inorganic particles.

5. The resin-coated metal sheet according to any one of claims 1 to 4, wherein the intermediate layer contains 10 mass% or more and 35 mass% or less of inorganic particles.

6. The resin-coated metal sheet according to any one of claims 1 to 5, wherein the thicknesses of the outermost layer and the bottommost layer are each 1.0 µm or more and 5.0 µm or less, and the thickness of the intermediate layer is 6.0 µm or more and 30 µm or less.

7. A metallic container formed using the resin-coated metal sheet according to any one of claims 1 to 6,
wherein the resin coating layer is on the outside of the metallic container.

8. A method of producing a resin-coated metal sheet, the method comprising:
a process of co-extruding, using a kneading extruder and discharging through a T-die, a first composition containing a polyester resin and at least one of an acid-modified polyolefin or an oxidized polyolefin having a melting point of 70 °C to 145 °C, a second composition containing a polyester resin, and a third composition containing a polyester resin, to obtain a sheet-shaped formed body in which the first composition, the second composition, and the third composition respectively form a first layer, a second layer, and a third layer;
a process of cooling and solidifying the formed body to obtain a laminated film;
a process of stretching the laminated film one or more times under conditions of a stretching temperature of 85 °C to 100 °C and a stretching ratio of 3.5 to 5.0 to obtain a resin film including the first layer, the second layer, and the third layer; and
a process of thermocompression bonding the resin film onto at least one side of a metal sheet controlled to 260 °C to 290 °C using a laminate roller controlled to 110 °C to 120 °C, thereby obtaining a resin-coated metal sheet comprising, on at least one side of the metal sheet, a resin coating layer having a melting point of 230 °C to 260 °C and having a structure of at least three layers, with the first layer, the second layer, and the third layer being an outermost layer, an intermediate layer, and a bottom layer, respectively.

9. The method of producing a resin-coated metal sheet according to claim 8, wherein the polyolefin has a weight-average molecular weight of 2000 or more and 50,000 or less.

10. The method of producing a resin-coated metal sheet according to claim 8 or 9, wherein the polyolefin has an acid value of 1.0 mg KOH/g or more and 90 mg KOH/g or less.

11. The method of producing a resin-coated metal sheet according to any one of claims 8 to 10, wherein the first composition and the third composition each contain 1.0 mass% or more and 10.0 mass% or less of slip-promoting inorganic particles.

12. The method of producing a resin-coated metal sheet according to any one of claims 8 to 11, wherein the second composition contains 10 mass% or more and 35 mass% or less of inorganic particles.

13. The method of producing a resin-coated metal sheet according to any one of claims 8 to 12, wherein the thicknesses of the outermost layer and the bottommost layer are each 1.0 µm or more and 5.0 µm or less, and the thickness of the intermediate layer is 6.0 µm or more and 30 µm or less.
